Europäisches Patentamt

**European Patent Office**

Office européen des brevets

(19)

(11) Publication number: **0 242 397 B1**

# EUROPEAN PATENT SPECIFICATION

(45) Date of publication of the patent specification:
**10.01.90**

(51) Int. Cl.⁴: **G 01 P 7/00, G 01 P 15/10**

(21) Application number: **86907040.9**

(22) Date of filing: **20.10.86**

(86) International application number:
**PCT/US 86/02220**

(87) International publication number:
**WO 87/02467 (23.04.87 Gazette 87/9)**

(54) **VIBRATING BEAM ACCELEROMETER WITH VELOCITY CHANGE OUTPUT.**

(30) Priority: **21.10.85 US 789752**

(43) Date of publication of application:
**28.10.87 Bulletin 87/44**

(45) Publication of the grant of the patent:
**10.01.90 Bulletin 90/2**

(84) Designated Contracting States:
**CH DE FR GB LI**

(56) References cited:
**EP-A- 0 132 282
US-A- 3 153 351
US-A- 3 332 290
US-A- 3 940 636
US-A-44 467 651
US-A-44 479 385**

(73) Proprietor: **SUNDSTRAND DATA CONTROL, INC.,
15001 N.E. 36th Street P.O. Box 97001, Redmond,
WA 98073-9701 (US)**

(72) Inventor: **PETERS, Rex, B., 17100 - 199th Place, N.E.,
Woodinville, WA 98072 (US)**

(74) Representative: **SERJEANTS, 25, The Crescent King
Street, Leicester, LE1 6RX (GB)**

## Description

*Technical Field*

The present invention relates to vibrating beam accelerometers and, in particular, to a push-pull vibrating beam accelerometer that directly determines velocity change.

*Background of the Invention*

In a vibrating beam accelerometer, a proof mass is suspended from a support by a flexure hinge, and a vibrating beam force transducer is connected along the sensitive axis of the accelerometer between the proof mass and the support. An acceleration along the sensitive axis results in a compression or tension force on the vibrating beam, resulting in a change in the beam vibration frequency. The beam vibration frequency is measured and used to determine acceleration.

A push-pull vibrating beam accelerometer typically comprises two vibrating beam sensors, as described above, mounted in a common housing such that a given acceleration results in a compression force on one vibrating beam and a tension force on the other vibrating beam. Each sensor produces an output signal having a frequency corresponding to the sensed acceleration, and the acceleration is calculated essentially as a function of the difference in the frequencies of the two output signals. This push-pull approach is typically more accurate than a single sensor instrument, due to the elimination of common mode errors.

Prior vibrating beam accelerometers have demonstrated the accuracy required for many kinds of inertial navigation and missile guidance applications, but have also been characterized by certain limitations. One limitation results from the fact that a vibrating beam acceleration sensor is an inherently non-linear device, and the sensor output must be linearized in some fashion before acceleration is integrated to determine velocity change. Another limitation is that output circuits used with vibrating beam accelerometers cannot measure velocity changes that occur during time intervals in which electrical power is unavailable. Such accelerometers are therefore incapable of operating through a short-term loss of power. Two prior art techniques exist for dealing with the first limitation, but they are complex and expensive. No techniques have previously been available for measuring velocity change over a time interval in which a power loss occurred.

Both electronic and mechanical techniques have previously been available for dealing with the nonlinearity of vibrating beam accelerometers. The electronic approach consists of measuring frequency by counting cycles of the sensor output signals (or signal) against a common clock, dividing the output frequency counts by the clock count to determine the frequencies, and then sampling and numerically processing the result to obtain acceleration. The acceleration is then numerically integrated to determine velocity change. This process is complex, and the sampling must be done at high speed to achieve accuracy. The mechanical approach to the nonlinearity problem is specific to the dual sensor accelerometer, and consists of mechanically trimming and matching the zero acceleration vibration frequencies and scale factors of the two sensors, so that a simple frequency difference is a sufficiently linear measure of acceleration. However the mechanical adjustments required to match two sensors to a few parts per million are difficult and time consuming, and tend to be self-defeating since they must be made prior to sealing the sensors and isolating the sensors from the environment. The mechanical trims and adjustments can therefore never be fully stabilized.

*Summary of the Invention*

The present invention provides a dual sensor frequency output accelerometer that does not require either high sampling rates or mechanical matching of the sensors to achieve a high level of accuracy.

In one aspect, the accelerometer comprises a pair of acceleration sensors, and means for determining velocity change $\Delta V$ along a sensitive axis during a selected time interval T. Each acceleration sensor is operative to produce an output signal having a frequency related to the acceleration along the sensitive axis. The sensors are arranged such that a given acceleration along the sensitive axis causes the frequency of one of the output signals to increase, and causes the frequency of the other output signal to decrease. Velocity change $\Delta V$ during time interval T is determined in accordance with the relation:

$$\Delta V = A [\Delta \phi + FT + B \Sigma \phi]$$

where A, F and B are constants, $\Delta \phi$ is the difference between the phase changes of the output signals over time interval T, and $\Sigma \phi$ is the sum of the phase changes of the output signals over time interval T. Each sensor preferably comprises a vibrating beam force sensing element, with each force sensing element being connected to a proof mass constrained to have a single degree of freedom defining the sensitive axis. The means for determining velocity change may comprise means for determining the relative phase of one output signal with respect to the other output signal at the beginning and end of time interval T, and means for determining the number of complete cycles of each output signal that occur during time interval T.

In another aspect, an accelerometer is provided for measuring velocity change along a sensitive axis during a time interval from $t_{n-1}$ to $t_n$ that includes a subinterval during which electrical power is unavailable. The accelerometer comprises a pair of acceleration sensors, and means for determining the velocity change $\Delta V$ along the sensitive axis during such time interval. Each acceleration sensor is operative to produce an output signal having a frequency related to the acceleration along the sensitive axis. The sensors are arranged such that a given acceleration along the sensitive axis causes the frequency of one output signal to increase and causes the frequency of the other output signal to decrease. The means for determining $\Delta V$ includes means for determining and storing a relative phase value corresponding to the relative phase of one output signal with respect to the other output signal at each of times $t_{n-1}$ and $t_n$.

The means for determining velocity change further comprises means for determining $\Delta V$ in accordance with relation:

$$\Delta V = A \, \Delta \phi$$

where A is a calibration constant and $\Delta \phi$ is the change in relative phase between times $t_{t-1}$ and $t_n$. The means for determining velocity change may also include means for adjusting $\Delta \phi$ at time $t_n$ by $\pm 2\pi$, such that $\Delta \phi$ for the time interval from $t_{n-1}$ to $t_n$ does not exceed $\pm \pi$.

In another aspect, an accelerometer is provided for measuring velocity change along a sensitive axis during a time interval from $t_{n-1}$ to $t_n$ that includes a subinterval during which electrical power is inavailable. The accelerometer comprises a pair of first sensors that produce a pair of first output signals and that have a scale constant $A_1$ and a pair of second sensors that produce a pair of second output signals and that have a scale constant $A_2$ that is not an integer multiple of $A_1$. The change of relative phase of the first output signals between times $t_{n-1}$ and $t_n$ ($\Delta W_1$) and a similar quantity for the second output signals ($\Delta W_2$) are determined, and integer values for i and j are determined such that:

$$A_1 (\Delta W_1 + i) = A_2 (\Delta W_2 + j)$$

The velocity change $\Delta V$ may then be determined as:

$$\Delta V = 2\pi A_1 (\Delta W_1 + i) = 2\pi A_2 (\Delta W_2 + j)$$

In another aspect, velocity change $\Delta V$, during time interval T, is determined in accordance with the relation

$$\Delta V = A_1 [(1 - A_2 \Sigma \phi) \Delta \phi + A_3 (\Delta \phi^7)^3 + A_4 \Sigma \phi + A_5 (\Delta \phi)^2 + A_0]$$

where $A_0$, $A_1$ and $A_4$ are nonzero constants, and where $A_2$, $A_3$ and $A_5$ are constants, at least one of which is nonzero. The $A_2$, $A_3$ and $A_5$ terms may be used to correct for particular types of nonlinearities in very high precision applications.

*Brief Description of the Drawings*

Figure 1 is a schematic view of a push-pull vibrating beam accelerometer;

Figure 2 is a timing diagram illustrating the calculation of $\Delta \phi$ and $\Sigma \phi$;

Figure 3 is a block diagram of a system for determining $\Delta V$ in accordance with the present invention;

Figure 4 is a timing diagram illustrating the operation of the system of figure 3; and

Figure 5 is a graph illustrating the determination of an unambiguous value for $\Delta V$ after a power loss based upon the output of two accelerometers.

*Detailed Description of the Invention*

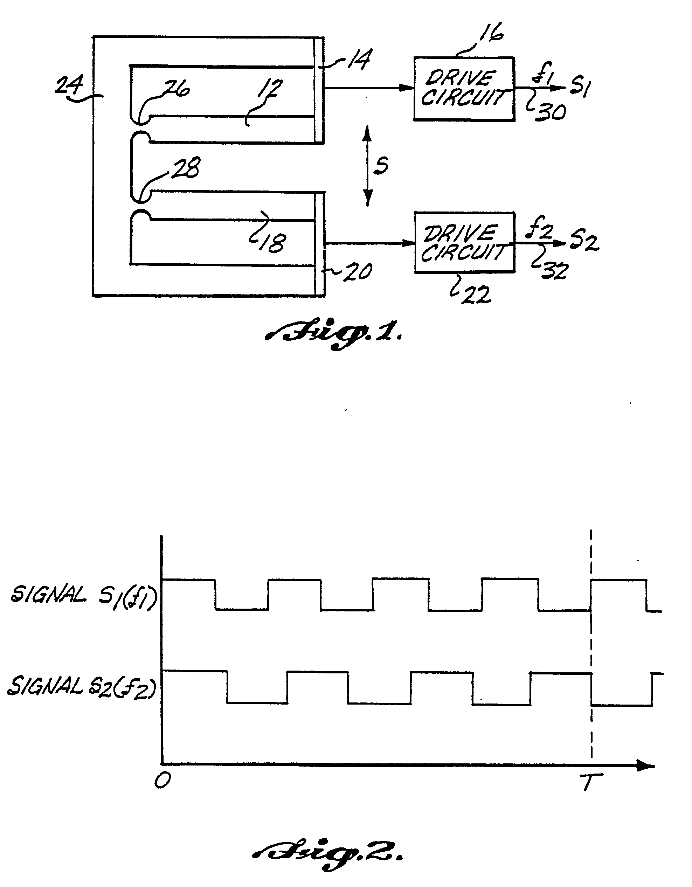

Figure 1 schematically illustrates a push-pull vibrating beam accelerometer. The accelerometer includes a first acceleration sensor comprising proof mass 12, force sensing element 14 and drive circuit 16, and a second acceleration sensor comprising proof mass 18, force sensing element 20 and drive circuit 22. Each force sensing element may comprise a quartz crystal having a double ended tuning fork construction, as illustrated in U.S. Patent No. 4 215 570. Proof masses 12 and 18 are mounted to support 24 by flexure hinges 26 and 28 respectively. Each flexure hinge constrains its associated proof masses to a single degree of freedom along sensitive axis S. Force sensing element 14 has one end attached to support 24 and a second end attached to proof mass 12, such that the proof mass is suspended at one end by flexure hinge 26 and at the other end by force sensing element 14. In a similar manner, force sensing element 20 has one end attached to support 24 and a second end attached to proof mass 18, such that proof mass 18 is suspended at one end by flexure hinge 28 and at its other end by force sensing element 20. In the illustrated embodiment, both force sensing elements are parallel to the sensitive axis S of the accelerometer, although other arrangements may also be used. As is well known to those skilled in the art, the force sensing elements can also be attached to the proof masses at the centers of precussion or the centers of mass of the respective proof masses, rather than at the ends of the proof masses opposite the flexure hinges.

As may be appreciated from Figure 1, a given acceleration along sensitive axis S will result in a compression force on one force sensing element and a tension force on the other force sensing element. For example, an upward acceleration along the sensitive axis will result in a tension force on force sensing element 14 and a compression force on force sensing element 20. Force sensing element 14 and drive circuit 16 comprise a force to frequency transducer that has a resonant frequency $f_1$, and that produces output signal S having frequency $f_1$. In a manner analogous to a vibrating string, the resonant frequency $f_1$ will increase in response to a tension force exerted along force sensing element 14 and will decrease in response to a compression force exerted along the force sensing element. Force sensing element 29 and drive circuit 22 comprise a similar force to frequency transducer that has a resonant frequency $f_2$ and that produces output signal $S_2$, the frequency $f_2$ rising and falling in response to tension and compression forces respectively along force sensing element 20. A given acceleration along sensitive axis S will therefore result in approximately equal but opposite changes in frequencies $f_1$ and $f_2$. It will be appreciated that a similar result could be achieved by attaching both force sensing elements to the same proof mass.

The acceleration versus frequency characteristic of a vibrating beam force transducer has the general form:

$$a = C \left( 1 - \left( \frac{f}{f_0} \right)^2 \right) \left[ 1 - D \left( 1 - \left( \frac{f}{f_0} \right)^2 \right) \right] \quad (1)$$

where C is a scaling constant, D is a linearity

constant, $f_0$ is the output frequency corresponding to zero acceleration, and f is the output frequency corresponding to acceleration a. This equation can be inverted to give:

$$f = f_0 + k_1 (a + k_2 a^2 + k_3 a^3 + ...) \qquad (2)$$

where

$$k_1 = - \frac{f_0}{2C} \qquad (3)$$

$$k_2 = \frac{1 + 4D}{4C} \qquad (4)$$

and

$$k_3 = \frac{1 + 4D + 16D^2}{8C^2} \qquad (5)$$

The constant D is small (e.g., D = .025) and tends to be nearly constant for a given beam design. However, $f_0$ and C vary considerably from beam to beam due to small dimensional differences. In a push-pull vibrating beam accelerometer, it is in principle possible to mechanically adjust the two sensors such that:

$$f_{01} = f_{02} \qquad (6)$$

and

$$C_1 = C_2 \qquad (7)$$

where $f_{01}$ and $f_{02}$ are the zero acceleration vibration frequencies of the first and second sensors respectively and $C_1$ and $C_2$ are the scaling constants of the first and second sensors respectively. In such a case, assuming that D is constant, the quadratic ($a^2$) term for the frequency difference $f_1 - f_2$ drops out, and the frequency difference can be written:

$$f_1 - f_2 = 2 k_1 a + k_1 k_3 a^3 + ... \qquad (8)$$

The $a^3$ term produces a variable scale factor shift that is on the order of one part per million per g of acceleration squared, and can be ignored in many cases. However, the problem with this approach is that the mechanical adjustments required to achieve the equalities of Equations (6) and (7) to a few parts per million are difficult and time consuming, and tend to be self-defeating since they must be made on unsealed sensors. Prior art push-pull accelerometers have therefore typically relied on an electronic approach that does not rely on the equalities of Equations (6) and (7). In the electronic approach, the frequencies $f_1$ and $f_2$ are sampled at a high rate, and the resulting samples are converted to acceleration. After acceleration is determined for each sample, the acceleration is integrated over time to produce net velocity change.

The present invention is based on the discovery that velocity change can be directly calculated from the output signals of a push-pull accelerometer without the need for mechanical matching of the sensors or for a high sampling rate. In accordance with the present invention, the velocity change $\Delta V$ over a given time interval T is determined as follows:

$$\Delta V = A (\Delta \phi + FT + B \Sigma \phi) \qquad (9)$$

where A, F and B are constants, $\Delta \phi$ is the difference between the phase changes of the output signals of the two sensors over time interval T, and $\Sigma \phi$ is the sum of the phase changes of the output signals over time interval T. The constants A, F, and B are determined as follows:

$$A = [k_{11} + k_{12} + B (k_{11} - k_{12})]^{-1} \qquad (10)$$

$$F = - (f_{01} - f_{02}) - B (f_{01} + f_{02}) \qquad (11)$$

and

$$B = \frac{k_{12} k_{22} - k_{11} k_{21}}{k_{12} k_{22} + k_{11} k_{21}} \qquad (12)$$

where $k_{11}$ and $k_{12}$ are the constant $k_1$ for sensors 1 and 2 respectively, $k_{21}$ and $k_{22}$ are constant $k_2$ for sensors 1 and 2 respectively, and $f_{01}$ and $f_{02}$ are constant $f_0$ for sensors 1 and 2 respectively.

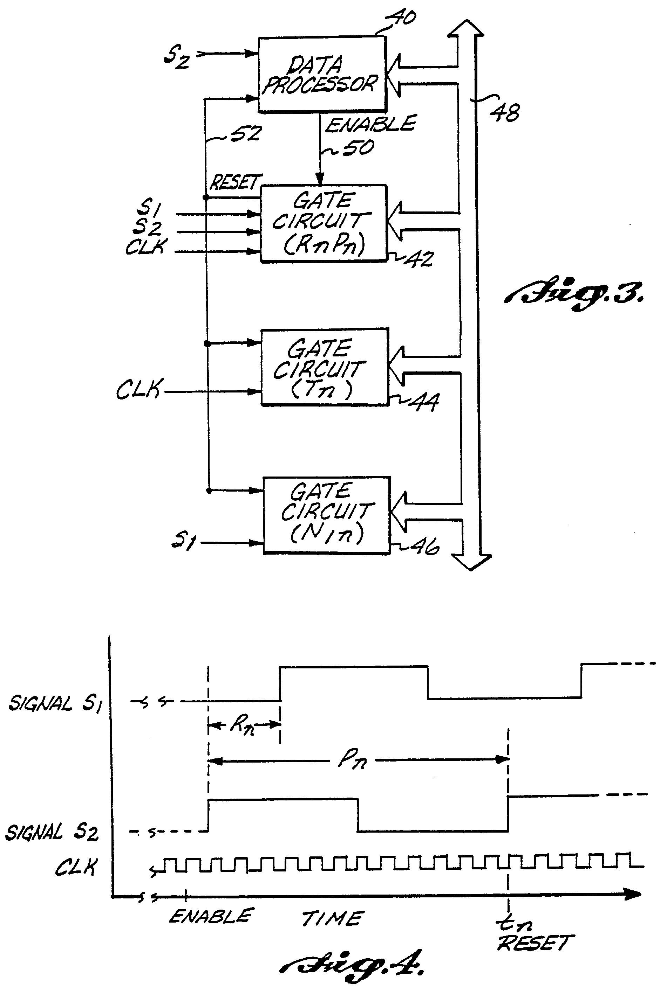

Determination of the quantities $\Delta \phi$ and $\Sigma \phi$ of Equation (9) is schematically illustrated in Figure 2. In Figure 2, output signals $S_1$ and $S_2$ of sensors 1 and 2 respectively are represented by square waves, with the frequency $f_1$ of signals $S_1$ being greater than the frequency $f_2$ of signal $S_2$. The time interval from zero to T contains four full cycles of signal $S_1$. The total phase change of signal $S_1$ in this time interval is therefore $4 \times 2 \pi = 8 \pi$. In the same time interval, output signal $S_2$ changes by 3.5 full cycles, for a phase change of $7 \pi$. In this example, the difference between the phase changes $\Delta \phi$ is equal to $\pi$, and the sum of the phase changes $\Sigma \phi$ is equal to $15 \pi$. The relative phase of signal $S_1$ with respect to signal $S_2$ is zero at time zero and $\pi$ at time T. In general, the «change in relative phase» will be equal to the «phase change difference» plus $2 \pi i$, where i is zero or a positive or negative integer.

Assume that the quantities $\Delta \phi$ are to be determined at a series of sample times $t_{n-1}, t_n, t_{n+1} ...,$ and that sample times $t_n$ will be selected to be synchronous with respect to the $S_2$ signal, i.e., the sample times occur every $N_2$ cycles of signal $S_2$. The quantity $\Delta \phi_n$ for the time interval from $t_{n-1}$ to $t_n$ may then be written as:

$$\Delta \phi_n = \phi_1 (t_n) - \phi_1 (t_{n-1}) - \phi_2 (t_n) + \phi_2 (t_{n-1}) \qquad (13)$$

where $\phi_1$ and $\phi_2$ refer to the phases of signals $S_1$ and $S_2$, respectively, and where the values in parentheses represent time. Equation (13) can be rewritten as:

$$\Delta \phi_n = 2 \pi (N_1 - N_2 + R_{n-1}/P_{n-1} - R_n/P_n) \qquad (14)$$

where $N_1$ is the number of complete cycles of signal $S_1$ in the time interval $t_{n-1}$ through $t_n$, $N_2$ is the number of cycles of the $S_2$ signal in the same time interval, and where the expression $R_n/P_n$ represents the relative phase or fraction of a cycle of signal $S_1$ with respect to signal $S_2$ at time $t_n$. A similar analysis for $\Sigma \phi_n$ leads to:

$$\Sigma \phi_n = 2 (N_1 + N_2 - R_{n-1}/P_{n-1} + R_n/P_n) \qquad (15)$$

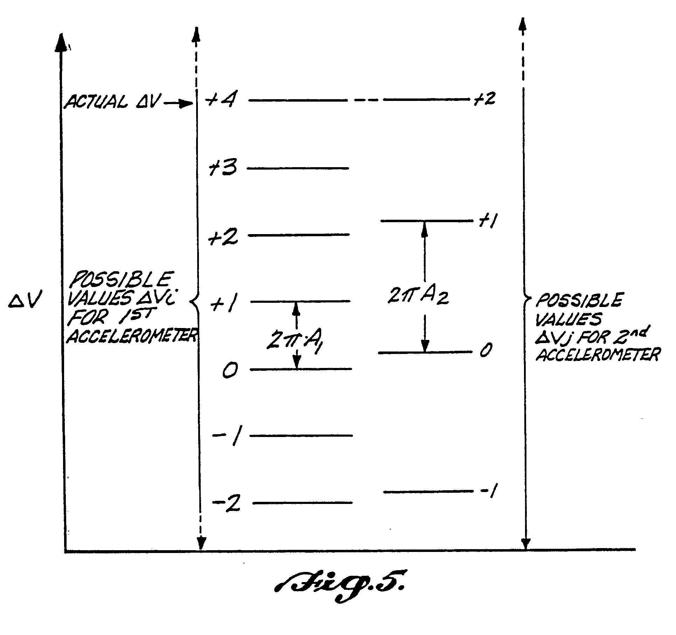

The significance of parameters R and P is indicated in Figure 4. Ignoring the CLK signal for the moment, for sample time $t_n$, $P_n$ represents the period of the last full cycle of signal $S_2$, and $R_n$ represents the time between the beginning of the last full cycle of signal $S_2$ and the beginning of the next cycle of signal $S_1$. $P_n$ is thus a measure of the frequency $f_2$ of signal $S_2$ at time $t_n$, and $R_n/P_n$ is a measure of the relative phase of signal $S_1$ with respect to signal $S_2$ at time $t_n$. It should be noted that if high resolution is not required, the R and P terms in Equation (14) and (15) can be ignored, and velocity change can be computed directly from the $N_1$ and $N_2$ values. The error in this approximation is not cumulative and can never exceed one cycle.

Figure 3 sets forth a block diagram of a system for determining velocity change $\Delta V$ in accordance with Equations (9), (14) and (15). The system comprises data processor 40 and gate circuits 42, 44 and 46 interconnected by bus 48. Each gate circuit comprises one or more gated counters, as detailed below, and data processor 40 periodically samples the counts accumulated by the gate circuits at each of a series of sample times $t_n$. In general, the sampling rate may be either synchronous or asynchronous with respect to signals $S_1$ or $S_2$. For purpose of illustration, the system will be described for the case in which sampling occurs every $N_2$ cycles of signal $S_2$. Data processor 40 directly receives signal $S_2$, as indicated in Figure 3, and issues an enable signal on line 50 every $N_2$ cycles of the $S_2$ signal. A short time later, gate circuit 42 issues a RESET signal on line 52 that causes counting operations for the current sample time ($t_n$) to stop, and that signals the data processor that the accumulated counts may be read (via bus 48) and processed. The data processor thereupon proceeds to read the accumulated counts, and to determine the net velocity change $\Delta V_n$ for the interval $t_{n-1}$ to $t_n$. As described below, the appearance of the RESET signal on line 52 is coincident with sampling time $t_n$ as shown in Figure 4.

Gate circuit 42 receives signals $S_1$ and $S_2$ and clock signal CLK, and periodically determines the values of parameters P and R. The clock signal CLK is a periodic signal having a frequency significantly higher than the frequencies $f_1$ and $f_2$ of signals $S_1$ and $S_2$, respectively. The CLK signal may be provided by an independent clock generator, or may be derived from the internal clock of data processor 40. Gate circuit 42 may be implemented using two counters, each of which increments its count with each cycle of the CLK signal. Both counters are reset to zero and begin counting at the first zero crossing or rising edge of signal $S_2$ that occurs after receipt of the enable signal on line 50. The first counter stops counting at the next rising edge of signals $S_1$. The second counter stops counting at the next rising edge of signal $S_2$. The contents of the first and second counters thereby correspond to parameters $R_n$ and $P_n$ respectively of Figure 4. When the second counter stops counting, gate circuit 42 issues the RESET signal on line 52, the RESET signal thereby corresponding to sampling time $t_n$.

Gate circuit 44 comprises a counter and a latch. The counter increments its count with each cycle of the CLK signal. Each time that a RESET signal appears on line 52, the contents of the counter are transferred to the latch, and the counter is reset to zero. Gate circuit 44 thereby determines the time (in cycles of the CLK signal) between successive RESET signals, and thus determines the time interval $T_n$ between successive sampling times $t_{n-1}$ and $t_n$.

Gate circuit 46 also comprises a counter and a latch. The counter increments its count with each rising edge of the $S_1$ signal. At the appearance of each RESET signal on line 52, the contents of the counter are transferred to the latch, and the counter is reset to zero. Gate circuit 46 therefore determines the quantity $N_{1n}$, i.e., the quantity $N_1$ [as defined above in connection with Equations (14) and (15)], for sampling time $t_n$.

In response to the RESET signal, data processor 40 proceeds to read the parameters $R_n$, $P_n$, $T_n$ and $N_{1n}$ corresponding to sampling time $t_n$, and then determines $\Delta V_n$, the velocity change between times $t_{n-1}$ and $t_n$. Combining Equations (9), (14) and (15) one may write:

$$\frac{\Delta V_n}{2 \pi A} = N_{1n} - N_2 + W_{n-1} - W_n + B [N_{1n} + N_2 + W_n - W_{n-1}] + FT_n \qquad (16)$$

$$= N_{1n} (1 + B) - (1 - B) (N_2 + W_n - W_{n-1}) + FT_n$$

where $W_n = R_n/P_n$ and $W_{n-1} = R_{n-1}/P_{n-1}$. After data processor 40 performs the calculation of Equation (16), the data processor adds $\Delta V_n/2 \pi A$ to a summing resgister containing the value accumulated for $\Delta V/2 \pi A$ through the preceding sample times. The current velocity may then be determined by multiplying the contents of the summing register by $2 \pi A$. In performing the calculation of Equation (16), it is to be noted that the quantity $W_n$ added at one

sample time is precisely subtracted (as $W_{n-1}$) at the next sampling time. There is therefore no round-off or accumulation error in the $\Delta V$ calculation due to the W terms. It is also noteworthy that in Equation (16), the accuracy of the calculation is not a function of the sampling rate. An appropriate sampling rate may therefore be determined simply by the need for current velocity information.

In a dual beam accelerometer in which the sensors are matched such that equalities of Equations (6) and (7) are true, constants F and B of Equation (9) are zero, and Equation (9) reduces to $\Delta V = A \Delta \phi$. The term $FT + B \Sigma \phi$ of Equation (9) therefore represents a correction term that eliminates the bias and linearity errors that result if the beams and pendulums are not perfectly matched. For a typical dual sensor accelerometer, this correction term will only contribute a few percent to the total $\Delta V$. The dominance of the $A \Delta \phi$ term provides a means for recovering velocity information when the accelerometer electronic system is shut down for a few milliseconds, e.g., by a nuclear pulse. Crystals used in vibrating beam accelerometers typically oscillate with Q values of at least a few thousand. When the drive circuit is deprived of power, the crystal will continue to vibrate for some time, slowly decaying in amplitude but still functioning as a force-to-frequency converter. The number of cycles required to decay to $1/e$ of the original amplitude is $Q/\pi$. For $Q = 3,000$, the decay time is therefore approximately a thousand cycles, or 25 milliseconds at a vibration frequency ($f_0$) of 40 kilohertz. This is more than ample to bridge many power outages. During such an outage, the therm $FT + B \Sigma \phi$ in Equation (9) is lost, but the term $A \Delta \phi$ may be determined, as described below. Because the term $FT + B \Sigma \phi$ contributes only a few percent to the total velocity change, the loss of this term for a few mlliseconds is inconsequential.

Assume that the time interval $T_n$ from time $t_{n-1}$ to time $t_n$ includes a subinterval during which drive circuits 16 and 22 (Figure 1) are deprived of power. Because force sensing elements 14 and 20 continue to vibrate, signals $S_1$ and $S_2$ will have the same phase relationship to one another after the subintervall as if the power loss had never occurred. Although the total phase change of the $S_1$ and $S_2$ signals during the power loss cannot be determined, it will be possible to determine the phase change difference $\Delta \phi_n$ over time interval $T_n$, provided that the actual relative phase change difference does not exceed $\pm 180°$. Rewriting Equation (16) for the case $B = F = 0$, one obtains:

$$\frac{\Delta V_n}{2 \pi A} = N_{1n} - N_2 + W_{n-1} - W_n = \Delta N + \Delta W \quad (17)$$

where $\Delta N = N_{1n} - N_2$ is equal to the (integer) number of full cycles of relative phase change between signals $S_1$ and $S_2$ during $T_n$, and where $\Delta W = W_{n-1} - W_n$ is equal to the fractional phase change between signals $S_1$ and $S_2$ during $T_n$. When a power outage is known to have occurred, the quantity $\Delta N$ is unknown, but the quantity $\Delta W$ may be calculated, provided that $W_{n-1}$ has been preserved through the power outage. If the phase change difference between signals $S_1$ and $S_2$ does not exceed $\pm 180°$, the quantity $\Delta W$ for the time interval that includes the power outage may be used to determine the quantity $\Delta N$ for that period as follows:

| ΔW | ΔN |
|---|---|
| − 1.0 to −0.5 | + 1 |
| − 0.5 to +0.5 | 0 |
| +0.5 to + 1.0 | − 1 |

the values of + 1 and −1 being equivalent to adjusting the observer phase change difference by $2 \pi$ and $-2 \pi$ respectively in accordance with the assumption that the actual phase change difference does not exceed $\pm 180°$. Once power is resumed after an outage, data processor 40 transfers operations to an initialization routine that performs the adjustments indicated above to determine $\Delta V_n / 2 \pi A$ for the time interval that includes the power outage, and adds the result to the summing register. Current velocity information is therefore determined after the outage by preserving only two quantities — $W_{n-1}$ and the contents of the summing register — through the period of power loss. Such quantities can be preserved through the use of electronically erasable PROM (EEPROM) or through other known memory means capable of retaining data through a power outage.

An alternate technique for determining velocity change during a time interval that includes a subinterval during which power is lost is to calculate the quantity $\Delta V_n / 2 \pi A$ in Equation (16) as if no power outage had occurred, but to then adjust such quantity as follows:

| Calculated $\Delta V_n / 2 \pi A$ | Adjustment |
|---|---|
| − 1.5 to − 0.5 | + 1 |
| − 0.5 to +0.5 | 0 |
| +0.5 to + 1.5 | − 1 |

The advantage of this technique is that it preserves the $\Sigma \phi$ data accumulated from the end of the power outage until $t_n$.

When the net phase change difference may exceed 180° during a power loss, then other techniques must in general be used for determining or estimating $\Delta V$ for the interval in which the power loss occurred. If the total velocity change is known at least approximately from the dynamics of the event that caused the power outage, then such knowledge may be sufficient. Alternatively, $\Delta V$ may be determined using two accelerometers having values of the constant A that are noninteger multiples of one another. This principle is illustrated in Figure 5. The left-hand side of the graph in Figure 5 illustrates a series of possible values $\Delta V_i$ for the quantity $\Delta V$ for a series of different estimates of the quantity $\Delta N$ (−2 through + 4) for the first accelerometer, the values $\Delta V_i$ being given by:

$$\Delta V_i = 2 \pi A_1 (\Delta W_1 + i) \quad (18)$$

where i is an integer (positive, negative or zero), and $A_1$ is the parameter A for the first accelerometer. The difference between adjacent levels is $2 \pi A_1$. The right-hand side of Figure 5 provides a similar illustration for the second accelerometer, for which the possible values of $\Delta V$ are given by:

$$\Delta V_j = 2 \pi A_2 (\Delta W_2 + j) \qquad (19)$$

where j is an integer and $A_2$ is the parameter A for the second accelerometer. The differences between adjacent levels are proportional to $2 \pi A_2$. The actual value of $\Delta V$ is the value at which possible values for both the first and second accelerometers exist, i.e.,

the value at which $A_1 (\Delta W_1 + i) = A_2 (\Delta W_2 + j)$ for integer i and j.

The calculations indicated by Equation (16) above account for the dominant quadratic nonlinearities of the vibrating beam force transducers in a push-pull vibrating beam accelerometer. However, Equation (16) omits certain higher order effects which may be significant in very high precision applications. If such effects are taken into account, then the formulation set forth in Equation (9) above can be expanded as follows:

$$\Delta V = A_1 [(1 - A_2 \Sigma \phi) \Delta \phi + A_3 (\Delta \phi)^3 + A_4 \Sigma \phi + A_5 (\Delta \phi)^2 + A_0] \qquad (20)$$

where $A_0 - A_5$ are constants, with $A_1$, $A_4$ and $A_0$ correspond to the constants A, B and F in Equation (9). The terms $\Delta \phi$ and $\Sigma \phi$ are determined as per Equations (14) and (15) above. The three new terms in Equation (20), i.e., the terms that include constants $A_2$, $A_3$ and $A_5$, may be added as required, depending upon the level of accuracy required. The $A_2$ term corrects the scale factor for rectification error. The $A_3$ term corrects static linearity for the order term, and the $A_5$ term can be used to separately correct purely dynamic quadratic rectification effects, such as crystal mistracking, as a function of frequency or gas pumping effects in accelerometer damping gaps. In the assumed case of a sensor with no tracking error and no asymmetry, the formulation set forth in Equation (20) is exact, with $A_5$ equal to zero, except for a $g^3$ term which will never be more than a few percent of the uncorrected cubic term, and which vanishes when the sampling frequency is as large or larger than the highest vibration frequency.

While the preferred embodiments of the invention have been illustrated and described, it should be understood that variations will be apparent to those skilled in the art. Accordingly, the invention is not to be limited to the specific embodiments illustrated and described, and the true scope and spirit of the invention are to be determined by reference to the following claims.

## Claims

1. An accelerometer for measuring velocity change along a sensitive axis, comprising:

a pair of acceleration sensors, each sensor being operative to produce an output signal having a frequency related to the acceleration along the sensitive axis, the sensors being arranged such that a given acceleration along the sensitive axis causes the frequency of one output signal to increase and the frequency of the other output signal to decrease; and

means for determining the velocity change $\Delta V$ along the sensitive axis during a selected time interval in accordance with the relation:

$$\Delta V = A [\Delta \phi + FT + B \Sigma \phi]$$

where A, F and B are nonzero constants, T is the length of said time interval, $\Delta \phi$ is the difference between the phase changes of the output signals over said time interval and $\Sigma \phi$ is the sum of the phase changes of the output signals over said time interval.

2. The accelerometer of Claim 1, wherein each sensor comprises a vibrating beam force sensing element, and wherein each force sensing element is connected to a proof mass constrained to have a single degree of freedom defining the sensitive axis.

3. The accelerometer of Claim 1, wherein the means for determining the velocity change includes means for determining the relative phase of one output signal with respect to the other output signal at times $t_{n-1}$ and $t_n$ that correspond to the beginning and ending of said time interval respectively.

4. The accelerometer of Claim 3, wherein the means for determining the relative phase comprises means for determining the time difference between preselected periodic characteristics of the output signals, means for determining the period of said other output signal, and means for determining a ratio value corresponding to the quotient of said time difference divided by said period.

5. The accelerometer of Claim 3, wherein the means for determining the velocity change includes means for determining the number of complete cycles of each output signal that occur during said time interval.

6. The accelerometer of Claim 5, wherein the means for determining the number of complete cycles of each output signal includes means for producing a series of enable signals after $N_1$ complete cycles of one of the output signals, and means for counting the number of full cycles of the other output signal that occur between successive enable signals.

7. An accelerometer for measuring velocity change along a sensitive axis during a time interval from $t_1$ to $t_2$ that includes a subinterval during which electrical power is unavailable, comprising:

a pair of acceleration sensors, each sensor being operative to produce an output signal having a frequency related to the acceleration along the sensitive axis, the sensors being arranged such that a given acceleration along the sensitive axis causes the frequency of one output signal to increase and the frequency of the other output signal to decrease; and

means for determining the velocity change $\Delta V$ along the sensitive axis during said time interval, including means for determining and storing a relative phase value corresponding to the relative phase of one of the output signals with respect to the other output signal at each of times $t_1$ and $t_2$, and means for determining $\Delta V$ in accordance with the relationship:

$$\Delta V = 2 \pi A \Delta W$$

where A is a calibration constant and $\Delta W$ is the change in said relative phase between times $t_1$ and $t_2$.

8. The accelerometer of Claim 7, wherein each sensor comprises a vibrating beam force sensing element, and wherein each force sensing element is connected to a proof mass constrained to have a single degree of freedom defining the sensitive axis.

9. The accelerometer of Claim 7, wherein the means for determining and storing the relative phase value comprises means for determining the time difference between preselected periodic characteristics of the output signals, means for determining the period of said other output signal and means for determining a ratio value corresponding to the quotient of said time difference divided by said period.

10. The accelerometer of Claim 7, wherein the means for determining the velocity change includes means for adjusting $\Delta W$ at time $t_2$ by $\pm 1$ such that $\Delta W$ for said time interval does not exceed $\pm 0.5$.

11. An accelerometer for measuring velocity change along a sensitive axis during a time interval from $t_{n-1}$ to $t_n$ that includes a subinterval during which electrical power is unavailable comprising:

a pair of first sensors, each first sensor being operative to produce a first output signal having a frequency related to the acceleration along the sensitive axis, the first sensors being arranged such that a given acceleration along the sensitive axis causes the frequency of one first output signal to increase and the frequency of the other first output signal to decrease;

a pair of second sensors, each second sensor being operative to produce a second output signal having a frequency related to the acceleration along the sensitive axis, the second sensors being arranged such that a given acceleration along the sensitive axis causes the frequency of one second output signal to increase and the frequency of the other second output signal to decrease;

means for determining and storing a first relative phase value corresponding to the relative phase of one of the first output signals with respect to the other first output signals at each of times $t_{n-1}$ and $t_n$;

means for determining and storing a second relative phase value corresponding to the relative phase of one of the second output signals with respect to the other second output signal at each of times $t_{n-1}$ and $t_n$;

means for determining values for i and j such that:

$$A_1 (\Delta W_1 + i) = A_2 (\Delta W_2 + j)$$

where i and j are integers, $A_1$ and $A_2$ are scale constants for the first and second pairs of sensors, respectively, and are not integer multiples of one

another, $\Delta W_1$ is the difference between the first relative phase value at time $t_{n-1}$ and the first relative phase value at time $t_n$, and $\Delta W_2$ is the difference between the second relative phase value at time $t_{n-1}$ and the second relative phase value at time $t_n$, whereby velocity change $\Delta V$ between times $t_{n-1}$ and $t_n$ may be determined as:

$$\Delta V = 2 \pi A_1 (\Delta W_1 + i) = 2 \pi A_2 (\Delta W_2 + j)$$

12. The accelerometer of Claim 1, further including means for determining the value of the expression:

$$A_5 (\Delta \phi)^2 + A_1 A_3 (\Delta \phi)^3 - A_1 A_2 \Sigma \phi \Delta \phi$$

where $A_1$, $A_2$, $A_3$ and $A_5$ are non-zero constants and wherein said value is added to the value of $\Delta V$ in determining the velocity change along the sensitive axis during said time interval.

13. The accelerometer of Claim 12, wherein the means for determining the velocity change includes means for determining the relative phase of one output signal with respect to the other output signal at times $t_{n-1}$ and $t_n$ that correspond to the beginning and ending of said time interval respectively.

14. The accelerometer of Claim 13, wherein the means for determining the relative phase comprises means for determining the time difference between preselected periodic characteristics of the output signals, means for determining the period of said other output signal, and means for determining a ratio value corresponding to the quotient of said time difference divided by said period.

**Patentansprüche**

1. Beschleunigungsmesser zur Messung von Geschwindigkeitsänderungen entlang einer Empfindlichkeitsachse mit:

einem Paar Beschleunigungsmeßfühler, wobei jeder Meßfühler die Funktion hat, ein Ausgangssignal mit einer auf die Beschleunigung entlang der Empfindlichkeitsachse bezogenen Frequenz zu erzeugen, und die Meßfühler so angeordnet sind, daß eine gegebene Beschleunigung entlang der Empfindlichkeitsachse bei einem der Ausgangssignale eine Frequenzsteigerung und bei dem anderen eine Reduzierung der Frequenz hervorruft; sowie

einer Vorrichtung zur Ermittlung der Geschwindigkeitsänderung $\Delta V$ entlang der Empfindlichkeitsachse während eines gewählten Zeitabschnitts nach folgender Gleichung:

$$\Delta V = A [\Delta \phi + FT + B \Sigma \phi]$$

wobei A, F und B null-ungleiche Konstanten, T die Dauer des gewählten Zeitabschnitts, $\Delta \phi$ die Differenz zwischen den Phasenänderungen des Ausgangssignals während dieser Zeit und $\Sigma \phi$ die Summe der Phasenänderungen der Ausgangssignale über diese Zeitspanne bedeuten.

2. Beschleunigungsmesser nach Anspruch 1, bei dem jeder Meßfühler mit einem Vibrationsspindel-Kraftmeßelement bestückt ist, und bei dem jedes Kraftmeßelement mit einer Prüfmasse, beschränkt auf einen einzigen, die Empfindlichkeitsachse definierenden Freiheitsgrad, verbunden ist.

3. Beschleunigungsmesser nach Anspruch 1, bei dem die Vorrichtung zur Bestimmung der Geschwindigkeitsänderung eine Vorrichtung enthält zur Ermittlung der relativen Phase eines Ausgangssignals bezogen auf das andere Ausgangssignal zu den den Anfang bzw. das Ende der besagten Zeitspanne darstellenden Zeitpunkten $t_{n-1}$ und $t_n$.

4. Beschleunigungsmesser nach Anspruch 3, bei dem die Vorrichtung zur Ermittlung der relativen Phase eine Vorrichtung enthält zur Bestimmung des Zeitunterschiedes zwischen vorgewählten periodischen Kenngrößen der Ausgangssignale, sowie eine Vorrichtung zur Bestimmung der Periode des erwähnten anderen Ausgangssignals und eine Vorrichtung zur Bestimmung eines Verhältniswertes, der dem Quotienten des erwähnten Zeitunterschiedes dividiert durch die erwähnte Periode entspricht.

5. Beschleunigungsmesser nach Anspruch 3, bei dem die Vorrichtung zur Bestimmung der Geschwindigkeitsänderung eine Vorrichtung enthält zur Ermittlung der Anzahl der während des besagten Zeitabschnitts vollendeten ganzen Takte eines jeden Ausgangssignals.

6. Beschleunigungsmesser nach Anspruch 5, bei dem die Vorrichtung zur Bestimmung der Anzahl ganzer Takte eines jeden Ausgangssignals eine Vorrichtung enthält zur Erzeugung einer Reihe von Steuersignalen nach jeweils $N_1$ vollendeten Takten eines der Ausgangssignale, sowie eine Vorrichtung zum Zählen der zwischen aufeinander folgenden Steuersignalen vollendeten Anzahl ganzer Takte des anderen Ausgangssignals.

7. Beschleunigungsmesser zur Messung von Geschwindigkeitsänderungen entlang einer Empfindlichkeitsachse während einer Zeitspanne $t_1$ bis $t_2$, die einen Unterabschnitt, in dem kein elektrischer Strom zur Verfügung steht, umfaßt, mit:

einem Paar Beschleunigungsmeßfühler, wobei jeder Meßfühler die Funktion hat, ein Ausgangssignal mit einer auf die Beschleunigung entlang der Empfindlichkeitsachse bezogenen Frequenz zu erzeugen, und die Meßfühler so angeordnet sind, daß eine gegebene Beschleunigung entlang der Empfindlichkeitsachse bei einem der Ausgangssignale eine Frequenzsteigerung und bei dem anderen eine Reduzierung der Frequenz hervorruft; sowie

einer Vorrichtung zur Bestimmung der Geschwindigkeitsänderung $\Delta V$ entlang der Empfindlichkeitsachse während der erwähnten Zeitspanne, welche wiederum eine Vorrichtung enthält zur Ermittlung und Speicherung eines relativen Phasenwertes, der der jeweiligen relativen Phase eines der Ausgangssignale bezogen auf das andere Ausgangssignal zu den Zeitpunkten $t_1$ bzw. $t_2$ entspricht, sowie eine Vorrichtung zur Ermittlung von $\Delta V$ nach der Gleichung:

$$\Delta V = 2 \pi A \, \Delta W$$

wobei A eine Eichkonstante ist und $\Delta W$ die Veränderung der relativen Phase zwischen den Zeitpunkten $t_1$ und $t_2$ ausdrückt.

8. Beschleunigungsmesser nach Anspruch 7, bei dem jeder Meßfühler mit einem Vibrationsspindel-Kraftmeßelement bestückt ist, und bei dem jedes Kraftmeßelement mit einer Prüfmasse, beschränkt auf einen einzigen die Empfindlichkeitsachse definierenden Freiheitsgrad, verbunden ist.

9. Beschleunigungsmesser nach Anspruch 7, bei dem die Vorrichtung zur Ermittlung und Speicherung des relativen Phasenwertes eine Vorrichtung enthält zur Bestimmung des Zeitunterschiedes zwischen vorgewählten periodischen Kenngrößen der Ausgangssignale, sowie eine Vorrichtung zur Bestimmung der Periode des erwähnten anderen Ausgangssignals und eine Vorrichtung zur Bestimmung eines Verhältniswertes, der dem Quotienten des erwähnten Zeitunterschiedes dividiert durch die erwähnte Periode entspricht.

10. Beschleunigungsmesser nach Anspruch 7, bei dem die Vorrichtung zur Bestimmung der Geschwindigkeitsänderung eine Vorrichtung enthält, mittels derer zum Zeitpunkt $t_2$ die Größe $\Delta V$ um $\pm 1$ reguliert werden kann, so daß $\Delta W$ während des betroffenen Zeitabschnitts nicht mehr als $\pm 0,5$ beträgt.

11. Beschleunigungsmesser zur Messung von Geschwindigkeitsänderungen entlang einer Empfindlichkeitsachse während einer Zeitspanne $t_{n-1}$ bis $t_n$, die einen Unterabschnitt, in dem kein elektrischer Strom zur Verfügung steht, umfaßt, mit:

einem ersten Meßfühlerpaar, wobei jeder der ersten beiden Meßfühler die Funktion hat, je ein erstes Ausgangssignal mit einer auf die Beschleunigung entlang der Empfindlichkeitsachse bezogenen Frequenz zu erzeugen, und wobei die ersten beiden Meßfühler so angeordnet sind, daß eine gegebene Beschleunigung entlang der Empfindlichkeitsachse bei einem der beiden ersten Ausgangssignale eine Frequenzsteigerung und bei dem anderen ersten Ausgangssignal eine Reduzierung der Frequenz verursacht;

einem zweiten Meßfühlerpaar, wobei jeder der beiden zweiten Meßfühler die Funktion hat, je ein zweites Ausgangssignal mit einer auf die Beschleunigung entlang der Empfindlichkeitsachse bezogenen Frequenz zu erzeugen, und wobei die beiden zweiten Meßfühler so angeordnet sind, daß eine gegebene Beschleunigung entlang der Empfindlichkeitsachse bei einem der beiden zweiten Ausgangssignale eine Frequenzsteigerung und bei dem anderen zweiten Ausgangssignal eine Reduzierung der Frequenz verursacht;

Vorrichtung zur Ermittlung und Speicherung eines ersten relativen Phasenwertes, der der relativen Phase eines der ersten Ausgangssignale bezogen auf das andere erste Ausgangssignal jeweils zu den Zeitpunkten $t_{n-1}$ und $t_n$ entspricht;

Vorrichtung zur Ermittlung und Speicherung eines zweiten relativen Phasenwertes, der der relativen Phase eines der zweiten Ausgangssignale bezogen auf das andere zweite Ausgangssignal jeweils zu den Zeitpunkten $t_{n-1}$ und $t_n$ entspricht;

Vorrichtung zur Ermittlung der Größen i und j, so daß:

$$A_1 (\Delta W_1 + i) = A_2 (\Delta W_2 + j)$$

wobei 1 und j ganzzahlig sind, $A_1$ und $A_2$ Skalen-

konstanten für das erste bzw. zweite Meßfühlerpaar, ohne daß eine Konstante das ganzzahlige Vielfache der anderen ist, $\Delta W$, der Unterschied ist zwischen dem ersten relativen Phasenwert zum Zeitpunkt $t_{n-1}$ und dem ersten relativen Phasenwert zum Zeitpunkt $t_n$, während $\Delta W_2$ die Differenz darstellt zwischen dem zweiten relativen Phasenwert zum Zeitpunkt $t_{n-1}$, und dem zweiten relativen Phasenwert zum Zeitpunkt $t_n$, und wobei die Geschwindigkeitsänderung $\Delta V$ zwischen den Zeitpunkten $t_{n-1}$ und $t_n$ ermittelt werden kann als:

$$\Delta V = 2\,\pi\,A_1\,(\Delta W_1 + i) = 2\,\pi\,A_2\,(\Delta W_2 + j)$$

12. Beschleunigungsmesser nach Anspruch 1, welcher außerdem eine Vorrichtung enthält zur Ermittlung des Wertes von

$$A_5\,(\Delta\phi)^2 + A_1\,A_3\,(\Delta\phi)^3 - A_1\,A_2\,\Sigma\,\phi\,\Delta\phi$$

wobei $A_1$, $A_2$, $A_3$ und $A_5$ null-ungleiche Konstanten sind und der ermittelte Wert zu dem Wert von $\Delta V$ addiert wird, um die Geschwindigkeitsänderung entlang der Empfindlichkeitsachse in der besagten Zeitspanne zu bestimmen.

13. Beschleunigungsmesser nach Anspruch 12, bei dem die Vorrichung zur Bestimmung der Geschwindigkeitänderung eine Vorrichtung enthält zur Ermittlung der relativen Phase eines der Ausgangssignale bezogen auf das andere Ausgangssignal zu den den Anfang bzw. das Ende der besagten Zeitspanne darstellenden Zeitpunkten $t_{n-1}$ und $t_n$.

14. Beschleunigungsmesser nach Anspruch 13, bei dem die Vorrichtung zur Ermittlung der relativen Phase eine Vorrichtung enthält zur Bestimmung des Zeitunterschiedes zwischen vorgewählten periodischen Kenngrößen der Ausgangssignale, sowie eine Vorrichtung zur Bestimmung der Periode des erwähnten anderen Ausgangssignals und eine Vorrichtung zur Bestimmung eines Verhältniswertes, der dem Quotienten des erwähnten Zeitunterschiedes dividiert durch die erwähnte Periode entspricht.


## Revendications

1. Un accéléromètre pour mesurer un changement de vitesse le long d'un axe sensible, comprenant:

une paire de capteurs d'accélération, chaque capteur produisant un signal de sortie qui a une fréquence liée à l'accélération le long de l'axe sensible, les capteurs étant conçus de façon qu'une accélération donnée le long de l'axe sensible provoque une augmentation de la fréquence d'un signal de sortie et une diminution de la fréquence de l'autre signal de sortie; et

des moyens pour déterminer le changement de vitesse $\Delta V$ le long de l'axe sensible pendant un intervalle de temps sélectionné, conformément à la relation:

$$\Delta V = A\,[\Delta\phi + FT + B\,\Sigma\,\phi]$$

dans laquelle A, F et B sont des constantes différentes de zéro, T est la longueur de l'intervalle de temps précité, $\Delta\phi$ est la différence entre les changements de phase des signaux de sortie sur l'intervalle de temps et $\Sigma\,\phi$ est la somme des changements de phase des signaux de sortie sur l'intervalle de temps.

2. L'accéléromètre de la revendication 1, dans lequel chaque capteur comprend un élément de détection de force à barreau vibrant, et dans lequel chaque élément de détection de force est relié à une masse étalon qui est guidée de façon à avoir un seul degré de liberté définissant l'axe sensible.

3. L'accéléromètre de la revendication 1, dans lequel les moyens utilisés pour déterminer le changement de vitesse comprennent des moyens pour déterminer la phase relative d'un signal de sortie par rapport à l'autre signal de sortie, à des instants $t_{n-1}$ et $t_n$ qui correspondent respectivement au début et à la fin de l'intervalle de temps précité.

4. L'accéléromètre de la revendication 3, dans lequel les moyens utilisés pour déterminer la phase relative comprennent des moyens pour déterminer la différence de temps entre des caractéristiques périodiques présélectionnées des signaux de sortie, des moyens pour déterminer la période de l'autre signal de sortie, et des moyens pour déterminer une valeur de rapport qui correspond au quotient de la différence de temps par la période précitée.

5. L'accéléromètre de la revendication 3, dans lequel les moyens utilisés pour déterminer le changement de vitesse comprennent des moyens pour déterminer le nombre de cycles complets de chaque signal de sortie qui apparaissent pendant l'intervalle de temps précité.

6. L'accéléromètre de la revendication 5, dans lequel les moyens utilisés pour déterminer le nombre de cycles complets de chaque signal de sortie comprennent des moyens pour produire une série de signaux de validation après chaque groupe de $N_1$ cycles complets de l'un des signaux de sortie, et des moyens pour compter le nombre de cycles complets de l'autre signal de sortie qui apparaissent entre des signaux de validation successifs.

7. Un accéléromètre pour mesurer un changement de vitesse le long d'un axe sensible pendant un intervalle de temps allant de $t_1$ à $t_2$, qui comprend un sous-intervalle pendant lequel on ne dispose pas d'énergie électrique, comprenant:

une paire de capteurs d'accélération, chaque capteur produisant un signal de sortie dont la fréquence est liée à l'accélération le long de l'axe sensible, les capteurs étant disposés de façon qu'une accélération donnée selon l'axe sensible augmente la fréquence d'un signal de sortie et diminue la fréquence de l'autre signal de sortie; et

des moyens pour déterminer le changement de vitesse $\Delta V$ le long de l'axe sensible pendant l'intervalle de temps précité, comprenant des moyens pour déterminer et enregistrer une valeur de phase relative correspondant à la phase relative de l'un des signaux de sortie par rapport à l'autre signal de sortie à chacun des instants $t_1$ et $t_2$ et des moyens pour déterminer $\Delta V$ conformément à la rélation:

$$\Delta V = 2\,\pi\,\alpha\,\Delta W$$

dans laquelle A est une constante d'étalonnage et $\Delta W$ est le changement de la phase relative entre les instants $t_1$ et $t_2$.

8. L'accéléromètre de la revendication 7, dans lequel chaque capteur comprend un élément de détection de force à barreau vibrant, et dans lequel chaque élément de détection de force est relié à une masse étalon qui est guidée de façon à avoir un seul degré de liberté définissant l'axe sensible.

9. L'accéléromètre de la revendication 7, dans lequel les moyens utilisés pour déterminer et enregistrer la valeur de phase relative comprennent des moyens pour déterminer la différence de temps entre des caractéristiques périodiques présélectionnées des signaux de sortie, des moyens pour déterminer la période de l'autre signal de sortie, et des moyens pour déterminer une valeur de rapport correspondant au quotient de la différence de temps par la période précitée.

10. L'accéléromètre de la revendication 7, dans lequel les moyens utilisés pour déterminer le changement de vitesse comprennent des moyens pour ajuster $\Delta W$ d'une quantité $\pm 1$ à l'instant $t_2$, de façon que $\Delta W$ pour l'intervalle de temps précité ne dépasse pas $\pm 0,5$.

11. Un accéléromètre pour mesurer un changement de vitesse le long d'un axe sensible pendant un intervalle de temps allant de $t_{n-1}$ à $t_n$ qui comprend un sous-intervalle pendant lequel on ne dispose pas d'énergie électrique, comprenant:

une paire de premiers capteurs, chaque premier capteur produisant un premier signal de sortie dont la fréquence est liée à l'accélération le long de l'axe sensible, les premiers capteurs étant disposés de façon qu'une accélération donnée le long de l'axe sensible augmente la fréquence d'un premier signal de sortie et diminue la fréquence de l'autre premier signal de sortie;

une paire de seconds capteurs, chaque second capteur étant conçu pour produire un second signal de sortie dont la fréquence est liée à l'accélération le long de l'axe sensible, les seconds capteurs étant disposés de façon qu'une accélération donnée le long de l'axe sensible augmente la fréquence d'un second signal de sortie et diminue la fréquence de l'autre second signal de sortie;

des moyens pour déterminer et pour enregistrer une première valeur de phase relative correspondant à la phase relative de l'un des premiers signaux de sortie par rapport à l'autre premier signal de sortie, à chacun des instants $t_{n-1}$ et $t_n$;

des moyens pour déterminer et pour enregistrer une seconde valeur de phase relative correspondant à la phase relative de l'un des seconds signaux de sortie par rapport à l'autre second signal de sortie, à chacun des instants $t_{n-1}$ et $t_n$;

des moyens pour déterminer des valeurs pour i et j de façon que:

$$A_1 (\Delta W_1 + i) = A_2 (\Delta W_2 + j)$$

avec les notations suivantes: i et j sont des entiers, $A_1$ et $A_2$ sont des constantes d'étalonnage respectivement pour la première paire et la seconde paire de capteurs, et ne sont pas des multiples entiers l'une de l'autre, $\Delta W_1$ est la différence entre la première valeur de phase relative à l'instant $t_{n-1}$ et la première valeur de phase relative à l'instant $t_n$, et $\Delta W_2$ est la différence entre la seconde valeur de phase relative à l'instant $t_{n-1}$ et la seconde valeur de phase relative à l'instant $t_n$, grâce à quoi on peut déterminer le changement de vitesse $\Delta V$ entre les instants $t_{n-1}$ et $t_n$ par la relation:

$$\Delta V = 2 \pi A_1 (\Delta W_1 + i) = 2 \pi A_2 (\Delta W_2 + j).$$

12. L'accéléromètre de la revendication 1, comprenant en outre des moyens pour déterminer la valeur de l'expression:

$$A_5 (\Delta \phi)^2 + A_1 A_3 (\Delta \phi)^3 - A_1 A_2 \Sigma \phi \Delta \phi$$

dans laquelle $A_1$, $A_2$, $A_3$ et $A_5$ sont des constantes différentes de zéro, et dans lequel la valeur précitée est ajoutée à la valeur de $\Delta V$ dans la détermination du changement de vitesse le long de l'axe sensible pendant l'intervalle de temps précité.

13. L'accéléromètre de la revendication 12, dans lequel les moyens utilisés pour déterminer le changement de vitesse comprennent des moyens pour déterminer la phase relative d'un signal de sortie par rapport à l'autre signal de sortie à des instants $t_{n-1}$ et $t_n$ qui correspondent respectivement au début et à la fin de l'intervalle de temps précité.

14. L'accéléromètre de la revendication 13, dans lequel les moyens utilisés pour déterminer la phase relative comprennent des moyens pour déterminer la différence de temps entre des caractéristiques périodiques présélectionnées des signaux de sortie, des moyens pour déterminer la période de l'autre signal de sortie, et des moyens pour déterminer une valeur de rapport qui correspond au quotient de la différence de temps précitée par la période.

*Fig.1.*

*Fig.2.*

*Fig.3.*

*Fig.4.*

Fig.5.